# EUROPEAN PATENT APPLICATION

(11) **EP 4 131 043 A1**
(43) Date of publication of application: **08.02.2023**
(21) Application number: 21189755.8
(22) Date of filing: 05.08.2021
(51) Int. Cl.: G06F 21/57, H04L 9/40, G06F 21/56, G07C 5/00, G07C 5/08

(54) **SOFTWARE VULNERABILITY ANALYSIS**

(71) Applicant: Continental Automotive Technologies GmbH, 30165 Hannover (DE)
(72) Inventor: XIONG, Siyang, 339780 Singapore (SG); HABIB, Sheikh Mahbub, 339780 Singapore (SG); WANG, Yi (Estelle), 339780 Singapore (SG); DEHM, Mathias, 339780 Singapore (SG)
(74) Representative: Continental Corporation

(57) **Abstract**

The present disclosure discloses a method and a system for analysing software vulnerability in an automotive system. The method comprises receiving one or more application files of a software application developed for the automotive system; analysing the one or more application files based on an automotive system specification, data from one or more security databases, an expert preference, and information about modules and functions of the software application; identifying one or more vulnerabilities in the one or more application files based on the analysis; and updating the one or more databases with the one or more vulnerabilities, wherein the updated one or more databases are used to detect the one or more vulnerabilities in the software application running on the automotive system in real-time, wherein one or more patches are provided to secure the automotive system.

## Description

### TECHNICAL FIELD

The present disclosure relates in general to automotive systems. Particularly, but not exclusively, the present disclosure relates to method and system for analysing software vulnerabilities in automotive systems.

### BACKGROUND

Automotive industry is rapidly growing and legacy mechanical controls are now replaced with electronic controls powered by software codes. A modem day vehicle is connected to various systems for controlling, monitoring and analysis of vehicle parameters. The systems host a multiple software applications either in a remote server or an edge server or in a combination of the remote server and the edge server. An application comprises a plurality of software codes and recent study has shown that vehicle applications comprises many erroneous codes which leads to vulnerabilities in the application.

Software vulnerabilities in the vehicle applications leads to failures in vehicle functions and critical vehicular systems. Also, software vulnerabilities makes the vehicle insecure and the vehicle can be remotely controlled, which leads to accidents. Therefore there is a need to secure the vehicle applications to secure the vehicle and provide proper vehicle functions.

The information disclosed in this background of the disclosure section is only for enhancement of understanding of the general background of the invention and should not be taken as an acknowledgment or any form of suggestion that this information forms the prior art already known to a person skilled in the art.

### SUMMARY

Additional features and advantages are realized through the techniques of the present disclosure. Other embodiments and aspects of the disclosure are described in detail herein and are considered a part of the claimed disclosure.

In an embodiment, the present disclosure discloses a method and a system for analysing software vulnerability in an automotive system. The method comprises receiving one or more application files of a software application developed for the automotive system; analysing the one or more application files based on an automotive system specification, database parameters from one or more security databases, an expert preference, and information about modules and functions of the software application; identifying one or more vulnerabilities in the one or more application files based on the analysis; and updating the one or more databases with the one or more vulnerabilities, wherein the updated one or more databases are used to detect the one or more vulnerabilities in the software application running on the automotive system in real-time, wherein one or more patches are provided to secure the automotive system.

In an embodiment, the one or more application files comprises a source file and/or a binary file.

In an embodiment analysing comprises static analysis and dynamic analysis, wherein during the static analysis the binary file and/or the source code file are not executed and during dynamic analysis the binary file and/or the source code file are executed.

In an embodiment, the one or more databases comprises a Common Vulnerabilities and Exposure (CVE) database and a Security Operation Center (SOC) database.

In an embodiment, the CVE database comprises information related to a plurality of vulnerabilities and the SOC database comprises security information related to the automotive system.

In an embodiment, the automotive system specification comprises version name, software update information, hardware information and network information.

In an embodiment, identifying comprises: comparing a result of analysis of the one or more application files with the plurality of vulnerabilities in the one or more databases; and detecting the one or more vulnerabilities based on the comparison.

The foregoing summary is illustrative only and is not intended to be in any way limiting. In addition to the illustrative aspects, embodiments, and features described above, further aspects, embodiments, and features may become apparent by reference to the drawings and the following detailed description.

### BRIEF DESCRIPTION OF THE ACCOMPANYING DRAWINGS

The novel features and characteristic of the disclosure are set forth in the appended claims. The disclosure itself, however, as well as a preferred mode of use, further objectives, and advantages thereof, may best be understood by reference to the following detailed description of an illustrative embodiment when read in conjunction with the accompanying drawings. The accompanying drawings, which are incorporated in and constitute a part of this disclosure, illustrate exemplary embodiments and, together with the description, serve to explain the disclosed principles. In the figures, the left-most digit(s) of a reference number identifies the figure in which the reference number first appears. One or more embodiments are now described, by way of example only, with reference to the accompanying figures wherein like reference numerals represent like elements and in which:
Fig. 1 shows a connected architecture of an automotive system.
Fig. 2 shows a simplified diagram of a system for analysing software vulnerabilities in an automotive system, in accordance with some embodiments of the present disclosure;
Fig. 3 shows an exemplary architecture of internal elements of a system for analysing software vulnerabilities in an automotive system, in accordance with some embodiments of the present disclosure; and
Fig. 4 shows a flowchart illustrating method steps for analysing software vulnerabilities in an automotive system, in accordance with some embodiments of the present disclosure;
Fig. 5 shows a general-purpose computer system for analysing software vulnerabilities in an automotive system, in accordance with embodiments of the present disclosure.

It should be appreciated by those skilled in the art that any block diagrams herein represent conceptual views of illustrative systems embodying the principles of the present subject matter. Similarly, it may be appreciated that any flow charts, flow diagrams, state transition diagrams, pseudo code, and the like represent various processes which may be substantially represented in computer readable medium and executed by a computer or processor, whether or not such computer or processor is explicitly shown.

### DETAILED DESCRIPTION

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example in the drawings and may be described in detail below. It should be understood, however that it is not intended to limit the disclosure to the particular forms disclosed, but on the contrary, the disclosure is to cover all modifications, equivalents, and alternative falling within the scope of the disclosure.

The terms "comprises", "includes" "comprising", "including" or any other variations thereof, are intended to cover a non-exclusive inclusion, such that a setup, device or method that comprises a list of components or steps does not include only those components or steps but may include other components or steps not expressly listed or inherent to such setup or device or method. In other words, one or more elements in a system or apparatus proceeded by "comprises... a" or "includes... a" does not, without more constraints, preclude the existence of other elements or additional elements in the system or apparatus.

In the following detailed description of the embodiments of the disclosure, reference is made to the accompanying drawings that form a part hereof, and in which are shown by way of illustration specific embodiments in which the disclosure may be practiced. These embodiments are described in sufficient detail to enable those skilled in the art to practice the disclosure, and it is to be understood that other embodiments may be utilized and that changes may be made without departing from the scope of the present disclosure. The following description is, therefore, not to be taken in a limiting sense.

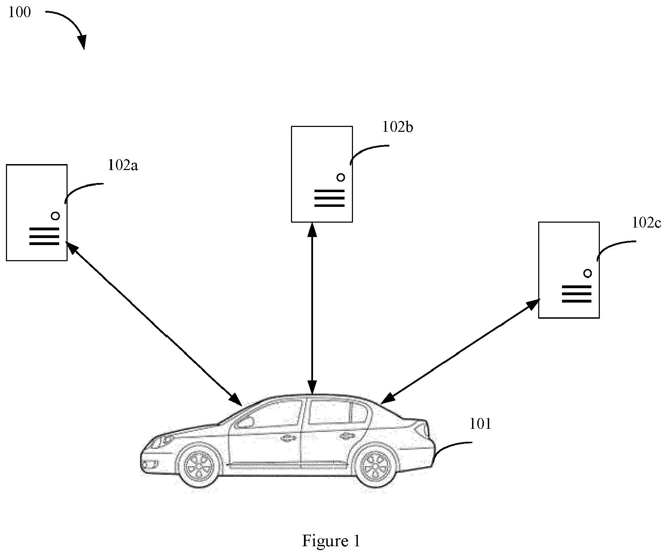

Fig. 1 shows an architecture 100 of an automotive system. The architecture 100 comprises a vehicle 101 and one or more servers 102a, 102b, 102c. In an embodiment, the vehicle 101 may be an autonomous vehicle, a semi-autonomous vehicle or a user driven vehicle. The vehicle 101 may comprise a plurality of functions which are controlled by a plurality of Electronic Control Units (ECUs) (not shown in Fig. 1). The plurality of ECUs comprises software codes that enable operation of the plurality of functions. In an embodiment, few functions can be controlled remotely. Examples of the plurality of functions include, but are not limited to, Air Conditioning (AC), light functions, infotainment system functions, navigation functions, vehicle security functions such as airbag system, vehicle mobility functions such as braking system, acceleration system, transmission, and the like.

In an embodiment, the one or more servers 102a, 102b, 102c may include an Original Equipment Manufacturer (OEM) server, a mobility server, a cyber security server and a telematics server. The OE server is associated with an OEM of the vehicle 101. The OEM server may manage essential functions of the vehicle 101 such as temperature, oil management, engine management, vehicle mobility functions and the like. The mobility server is configured to manage the vehicle mobility functions alone. In an example, for an autonomous vehicle, the mobility server may be dedicated server to manage the vehicle mobility functions. For example, the mobility server may collect vehicle surrounding data, vehicle location data, vehicle parameters such as current speed, acceleration, vehicle specification from the OEM server and the like. Likewise, a telematics server may collect data from the vehicle 101, driver and passengers. Further, the telematics server may analyse the data and provide services accordingly. For example, the telematics server may collect location information from the vehicle 101, and food preferences from the driver and passengers in the vehicle 101. Thereafter, the telematics server may provide option of nearby restaurants.

In some embodiments, the one or more servers 102a, 102b, 102c are configured as a remote server or an edge server or a combination of both. In an instance, the telematics server may be configured as a remote server which resides remote to the vehicle 101 and collects data from the vehicle 101 and perform analysis. As a remote server, the telematics server may be able to process large data set. The telematics server can collect data from a plurality of vehicles and analyse the large data set. In another instance, the telematics server may reside in the vehicle 101 and collect the data from vehicle 101 and perform analysis on the limited data set. While the remote server provides better analysis, the edge server provides faster analysis.

As described above, the vehicle 101 is connected to the one or more server 102a, 102b, 102c. In an embodiment, the one or more servers may provide Over The Air (OTA) updates to the vehicle 101. In an embodiment, the vehicle 101 may be connected to the one or more servers 102a, 102b, 102c via the Internet or cellular network.

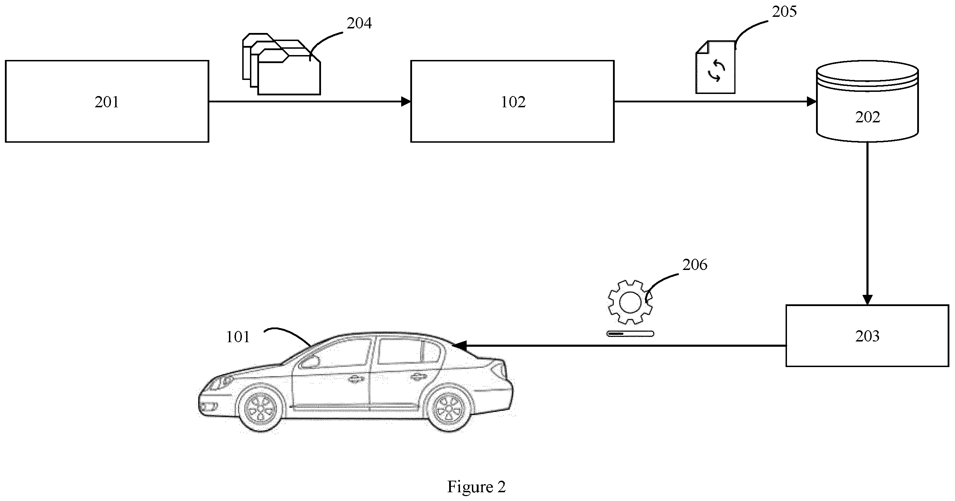

Fig. 2 shows a simplified diagram of a system 102 for analysing software vulnerabilities in an automotive system, in accordance with some embodiments of the present disclosure. Fig. 2 shows a development tool 201, the system 102, a database 202, a patch manager 203 and the vehicle 101. In an implementation, the system 102 may reside in any or all of the one or more servers 102a, 102b, 102c. In another implementation, the system 102 may reside in one or more of the plurality of ECUs. The system 102 may be associated with an application development platform (not shown in Fig. 2). The application development platform may comprise a designing tool, a development tool, a testing tool, and a deployment tool. The application development platform may be used to design and develop the plurality of functions for the vehicle 101. For example, the designing tool may be used to design use cases for the plurality of functions, the development tool may be used to write software codes for the plurality of functions, the testing tool may be used to test the software codes and the deployment tool may be used to deploy the tested software codes in any or all of the plurality of servers 102a, 102b, 102c.

The system 102 is configured to analyse software vulnerabilities in the software codes of the plurality of functions. The system 102 may be automated perform the operations illustrated in the Fig. 2. In an exemplary embodiment, the system 102 receives one or more application files 204 of a software application developed for the automotive system. In an embodiment, the software application may be an end-user program or a module of the end-user program defining one or more functions from the plurality of functions. The one or more application files 204 includes, but not limited to, source files and binary files. Further, the system 102 analyses the one or more application files 204 based on an automotive specification, data from one or more security databases 202, expert preference and information about modules and the plurality of functions. The automotive specification may be obtained from the OEM server and the information about modules and the plurality of functions may be obtained from the development tool 201. The system 102 may use different techniques to analyse the one or more application files 204 to determine one or more vulnerabilities in the software application.

The system 102 then updates the database 202 with the one or more vulnerabilities 205 in the software application. In an embodiment, the database 202 may be a Common Vulnerabilities and Exposure (CVE) database and a Security Operation Center (SOC) database. The CVE database is a public database including commonly known software vulnerabilities. However, the CVE database is not updated with the one or more vulnerabilities 205 related to automotive systems. Similarly, the SOC database includes commonly known security threats in in organization, and technologies used in an organization. However, the SOC database does not provide specific information about security threats in the automotive industry. Traditional vulnerability assessment systems refer to the CVE database and the SOC database and identify the vulnerabilities in software applications, that are generic in nature and fail to identify domain specific threats. In the present disclosure, the system 102 updates the database 202 with the one or more vulnerabilities 205 specific to the automotive system. Therefore, the system 102 can identify the threats to the automotive system using the updated database 202. In a first, an erroneous network parameter in the source file of a communication module of the vehicle 101 may lead to a security flaw leading to hacks. The system 102 identifies the erroneous network parameter and updates the database 202 with the network threat that may be caused to the vehicle 101.

The patch manager 203 may then determine required patches to neutralize the threats. For example, the patches may include software update to remove the vulnerabilities in the software application causing the threats. Referring to the first example, the patch manager 203 determines a corrected code to correct the erroneous network parameter. Further, the patch manager 203 transmits the corrected code (206) as OTA update or manual update during a service of the vehicle 101 to update the software application. Therefore, the updated software application is free from the one or more vulnerabilities 205.

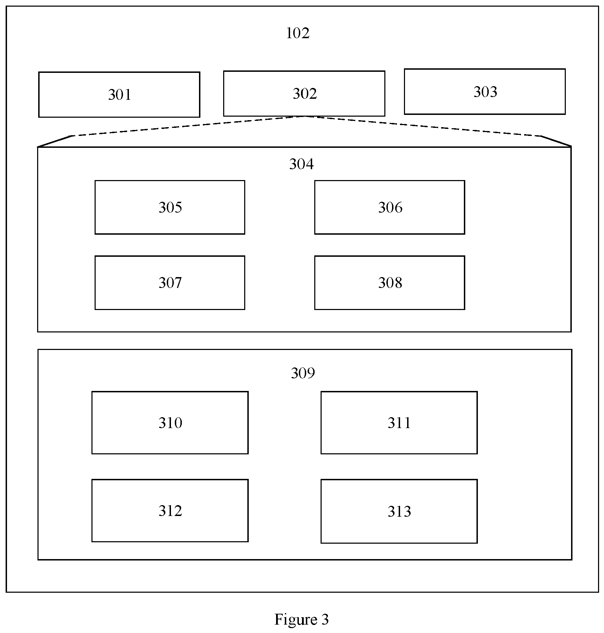

Fig. 3 shows a detailed block diagram of the system 102. The system 102 may include Central Processing Unit ("CPU" or "processor") 303 and a memory 302 storing instructions executable by the processor 303. The processor 303 may include at least one data processor for executing program components for executing user or system-generated requests. The memory 302 may be communicatively coupled to the processor 303. The system 102 further includes an Input/ Output (I/O) interface 301. The I/O interface 301 may be coupled with the processor 303 through which an input signal or/and an output signal may be communicated.

In some implementations, the system 102 may include data 304 and modules 309. As an example, the data 304 and modules 309 may be stored in the memory 302 configured in the system 102. In one embodiment, the data 304 may include, for example, automotive system specification 305, database parameters 306, expert preference data 307, and application data 308.

In an embodiment, the automotive system specification 305 may include but not limited to, application version, software update information, hardware information, network information, vehicle make, vehicle model, vehicle color, maximum speed, maximum torque, dimensions, engine parameters, infotainment features, vehicle connectivity type, and the like. The system 102 may obtain the automotive system specification 305 from the OEM server.

In an embodiment, the database parameters 306 may include plurality of vulnerabilities and security threats. The database parameters 306 may be stored in the database 202 (e.g., CVE database and SOC database).

In an embodiment, the expert preference data 307 may include inputs provided by domain experts about vehicle functions and security features. For example, an OEM engineer may have provide information that the vehicle 101 has to be serviced at selected service stations. Likewise, the OEM engineer may have indicated list of third party applications for controlling the vehicle 101.

In an embodiment, the application data 308 may include type of application, functions of the application, permission required by the application, modules and functions of the software application and the like.

In some embodiments, data 304 may be stored in the memory 302 in form of various data structures. Additionally, the data 304 may be organized using data models, such as relational or hierarchical data models.

In some embodiments, the data 304 stored in the memory 302 may be processed by the modules 309 of the system 102. The modules 309 may be stored within the memory 302. In an example, the modules 309 communicatively coupled to the processor 303 configured in the system 102, may also be present outside the memory 302 and implemented as hardware. As used herein, the term modules may refer to an application specific integrated circuit (ASIC), a Field Programmable Gate Array (FPGA), an electronic circuit, a processor 303 (shared, dedicated, or group), and memory 302 that execute one or more software or firmware programs, a combinational logic circuit, and/or other suitable components that provide the described functionality. In some other embodiments, the modules 309 may be implemented using at least one of ASICs and FPGAs.

In one implementation, the modules 309 may include, for example, a communication module 310, an analysis module 311, an identification module 312, an update module 313. It may be appreciated that such aforementioned modules 309 may be represented as a single module or a combination of different modules 309.

In an embodiment, the communication module 310 is configured to receive the one or more application files 204 from the development tool 201. Further, the communication module 310 is configured to communicate the one or more vulnerabilities 205 to the database 202. In an embodiment, when the patch manager 203 is implemented in the system 102, the communication module 310 is configured to send the corrected code 206 to the vehicle 101. Also, the communication module 310 is configured to obtain the data 304 from the database 202.

In an embodiment, the analysis module 311 is configured to analyse the one or more application files 204. The analysis module 311 analyses the source files and the binary files based on the automotive system specification 305, the database parameters 306, the expert preference data 307 and information about modules and the application data 308. In some embodiments, the analysis module 311 may employ Artificial Intelligence (AI) and Machine Learning (ML) techniques to analyse the one or more application files 204.

In an embodiment, the identification module 312 is configured to identify the one or more vulnerabilities 205 in the one or more application files 204. The identification module 312 compares the analysis of the one or more application files 204 with the plurality of vulnerabilities stored in the database 202. Further, when there is match between the analysis and the plurality of vulnerabilities, the identification module identifies the one or more vulnerabilities 205. In an embodiment, the one or more vulnerabilities 205 may not be identified only based on the comparison. During the analysis, the analysis module 311 may have determined risky codes that may lead to potential threats. The identification module 312 may use historical analysis data, the expert preference data 307 and the application data 308 to identify the one or more vulnerabilities 205. The one or more vulnerabilities 205 may include insufficient logging and monitoring, injection flaws, sensitive data exposure, using components with known vulnerabilities, weak authentication, security misconfiguration, memory mismanagement, processor overloading, design flaws, insecure network parameters, and the like.

In an embodiment, the update module 313 is configured to update the database 202 with the one or more vulnerabilities 205. When the one or more vulnerabilities 205 are not among the plurality of vulnerabilities in the database 202, the update module 313 updates the database 202 with the one or more vulnerabilities 205.

In an embodiment, the system 102 may include a threat detection module (not shown) may be configured to detect threats to the automotive system based on the updated database 202. Further, the patch manager 203 may generate the corrected codes 206 to neutralize the threats.

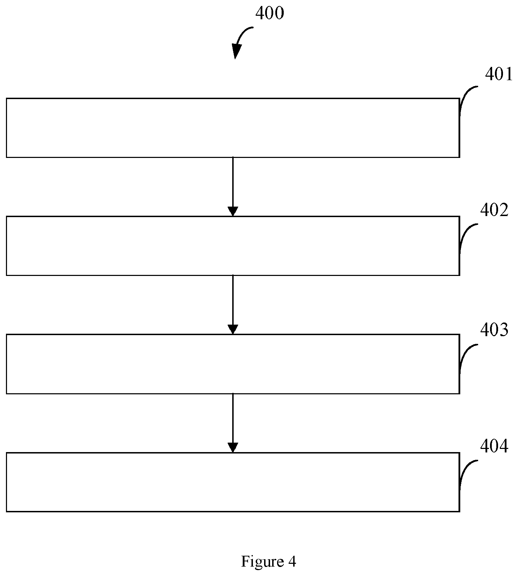

Fig. 4 shows a flowchart illustrating a method for analysing software vulnerabilities in the automotive system, in accordance with some embodiment of the present disclosure. The order in which the method 400 may be described is not intended to be construed as a limitation, and any number of the described method blocks may be combined in any order to implement the method. Additionally, individual blocks may be deleted from the methods without departing from the spirit and scope of the subject matter described herein. Furthermore, the method may be implemented in any suitable hardware, software, firmware, or combinations thereof.

At the step 401, the system 102 receives the one or more application files 204 from the development tool 201. As described above, the one or more application files 204 includes the source files and the object files. The source files may be written in different languages using the development tool 201. Further, a compiler (not shown) generates the binary codes using the source files. In an embodiment, the system 102 may be configured to automatically receive the one or more application files 204 from the development tool 201. For example, the system 102 may be linked with the development tool 201 via an Application Program Interface (API). The one or more application files 204 may be pushed to the system 102 automatically via the API. Likewise, when the compiler generates the binary files, the system 102 may automatically receive the binary files from the compiler.

At step 402, the system 102 analyses the one or more application files 204. The system uses the automotive system specification 305, the database parameters 306, the expert preference data 307 and the application data to analyse the one or more application files 204. The system 102 may use static analysis or dynamic analysis. Static analysis incudes checking if the source files comply with coding standards such as IS026262. The coding standards may include rules to be followed for developing efficient code. Static analysis enables to determine vulnerabilities such as programming errors, coding standard violations and security weaknesses. More specifically, static analysis is used to determine buffer overflow, memory leaks and null pointers. Dynamic analysis includes executing the binary files and checking for vulnerabilities. Dynamic analysis is used to determine performance of CPUs and GPUs. Also, dynamic analysis enables to identify vulnerabilities in the live software application, load on serves running the software application, integration issues and the like.

At step 403, the system 102 identifies the one or more vulnerabilities 205 based on the analysis. In one embodiment, the system 102 compares the analysis with the plurality of vulnerabilities stored in the database 202. The plurality of vulnerabilities may be obtained from a plurality of organizations. However, the database 202 may not be updated and the one or more vulnerabilities 205 may be identified using the automotive system specification 305, the expert preference data 307 and the application data 307. The application data 307 may define the priority modules and functions. Likewise, the expert preference data 307 may define the critical functions. In an embodiment, the system 102 may use historical mapping between analysis and the plurality of vulnerabilities, AI or ML techniques to identify the one or more vulnerabilities 205. In an embodiment, the system 102 alerts one or more personnel about the one or more vulnerabilities 205. For example, the system 102 may alert a development team about the one or more vulnerabilities 205. The alert helps the development team to fix the one or more vulnerabilities 205. Further, the system 102 may generate a report including details about the one or more vulnerabilities 205. For example, the report may include the software application details, the source code details, the one or more vulnerabilities 205, and the like. The report may be used to debug the source code.

At step 404, the system 102 updates the database 202 with the one or more vulnerabilities 205. The database 202 may be populated periodically with the one or more vulnerabilities 205. The updated database 202 may be used to detect the threats to the automotive system. For example, a weak authentication function of the software application may lead to security failure. The threats may also be predicted using prediction techniques. The threats may be notified to the OEM server, and the security server. Further, the user of the vehicle 101 may also be alerted with the threats. Thereafter, the patch manage 203 may generate the corrected code 206 to fix the one or more vulnerabilities 205.

The present disclosure enables to detect threats that are not available in databases 202. The database 202 is frequently updated, thereby updating the vulnerability list. Software bugs can be fixed in the early stage of the software development cycle using the proposed method and system 102. Automated process of vulnerability assessment allows efficient detection of threats, thereby securing the vehicle 101.

### COMPUTER SYSTEM

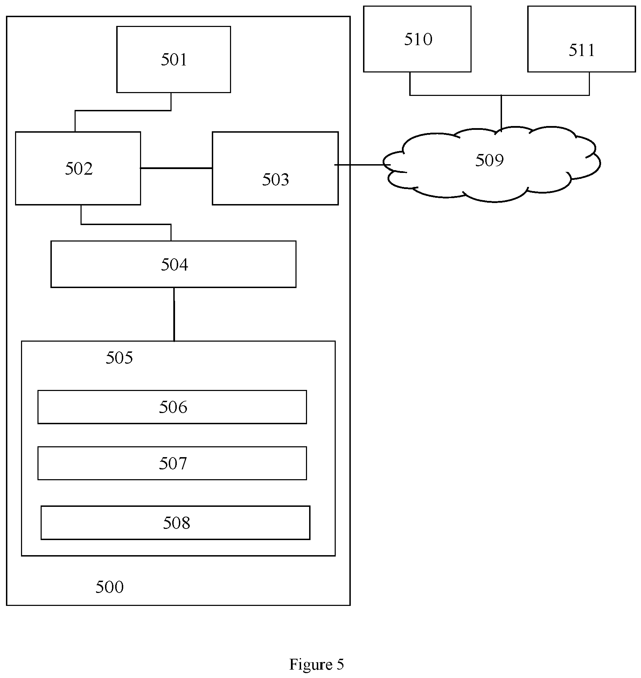

Fig. 5 illustrates a block diagram of an exemplary computer system 500 for implementing embodiments consistent with the present disclosure. In an embodiment, the computer system 500 may be used to implement the method of generating filter sequences to train the model. The computer system 500 may comprise a central processing unit ("CPU" or "processor") 502. The processor 502 may comprise at least one data processor for executing program components for dynamic resource allocation at run time. The processor 502 may include specialized processing units such as integrated system (bus) controllers, memory management control units, floating point units, graphics processing units, digital signal processing units, etc.

The processor 502 may be disposed in communication with one or more input/output (I/O) devices (not shown) via I/O interface 501. The I/O interface 501 may employ communication protocols/methods such as, without limitation, audio, analog, digital, monoaural, RCA, stereo, IEEE-(1394), serial bus, universal serial bus (USB), infrared, PS/2, BNC, coaxial, component, composite, digital visual interface (DVI), high-definition multimedia interface (HDMI), RF antennas, S-Video, VGA, IEEE 502.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using the I/O interface 501, the computer system 500 may communicate with one or more I/O devices. For example, the input device 510 may be an antenna, keyboard, mouse, joystick, (infrared) remote control, camera, card reader, fax machine, dongle, biometric reader, microphone, touch screen, touchpad, trackball, stylus, scanner, storage device, transceiver, video device/source, etc. The output device 511 may be a printer, fax machine, video display (e.g., cathode ray tube (CRT), liquid crystal display (LCD), light-emitting diode (LED), plasma, Plasma display panel (PDP), Organic light-emitting diode display (OLED) or the like), audio speaker, etc.

In some embodiments, the computer system 500 is connected to the service operator through a communication network 509. The processor 502 may be disposed in communication with the communication network 509 via a network interface 503. The network interface 503 may communicate with the communication network 509. The network interface 503 may employ connection protocols including, without limitation, direct connect, Ethernet (e.g., twisted pair 10/100/1000 Base T), transmission control protocol/Internet protocol (TCP/IP), token ring, IEEE 802.11a/b/g/n/x, etc. The communication network 509 may include, without limitation, a direct interconnection, e-commerce network, a peer to peer (P2P) network, local area network (LAN), wide area network (WAN), wireless network (e.g., using Wireless Application Protocol), the Internet, Wi-Fi, etc. Using the network interface 503 and the communication network 509, the computer system 500 may communicate with the one or more service operators.

In some embodiments, the processor 502 may be disposed in communication with a memory 505 (e.g., RAM, ROM, etc. not shown in Figure 7 via a storage interface 504. The storage interface 504 may connect to memory 505 including, without limitation, memory drives, removable disc drives, etc., employing connection protocols such as serial advanced technology attachment (SATA), Integrated Drive Electronics (IDE), IEEE-1394, Universal Serial Bus (USB), fiber channel, Small Computer Systems Interface (SCSI), etc. The memory drives may further include a drum, magnetic disc drive, magneto-optical drive, optical drive, Redundant Array of Independent Discs (RAID), solid-state memory devices, solid-state drives, etc.

The memory 505 may store a collection of program or database components, including, without limitation, user interface 506, an operating system 507, web server 508 etc. In some embodiments, computer system 500 may store user/application data 506, such as the data, variables, records, etc. as described in this disclosure. Such databases may be implemented as fault-tolerant, relational, scalable, secure databases such as Oracle or Sybase.

The operating system 507 may facilitate resource management and operation of the computer system 500. Examples of operating systems include, without limitation, APPLE^{®} MACINTOSH^{®} OS X^{®}, UNIX^{®}, UNIX-like system distributions (E.G., BERKELEY SOFTWARE DISTRIBUTION^{®} (BSD), FREEBSD^{®}, NETBSD^{®}, OPENBSD, etc.), LINUX^{®} DISTRIBUTIONS (E.G., RED HAT^{®}, UBUNTU^{®}, KUBUNTU^{®}, etc.), IBM^{®}OS/2^{®}, MICROSOFT^{®} WINDOWS^{®} (XP^{®}, VISTA^{®}/7/8, 10 etc.), APPLE^{®} IOS^{®}, GOOGLETM ANDROIDTM, BLACKBERRY^{®} OS, or the like.

In some embodiments, the computer system 500 may implement a web browser (not shown in Figure) stored program component. The web browser may be a hypertext viewing application, such as MICROSOFT^{®} INTERNET EXPLORER^{®}, GOOGLETM CHROMETM, MOZILLA^{®} FIREFOX^{®}, APPLE^{®} SAFARI^{®}, etc. Secure web browsing may be provided using Secure Hypertext Transport Protocol (HTTPS), Secure Sockets Layer (SSL), Transport Layer Security (TLS), etc. Web browsers 508 may utilize facilities such as AJAX, DHTML, ADOBE^{®} FLASH^{®}, JAVASCRIPT^{®}, JAVA^{®}, Application Programming Interfaces (APIs), etc. In some embodiments, the computer system 500 may implement a mail server stored program component. The mail server may be an Internet mail server such as Microsoft Exchange, or the like. The mail server may utilize facilities such as Active Server Pages (ASP), ACTIVEX^{®}, ANSI^{®} C++/C#, MICROSOFT^{®}, NET, CGI SCRIPTS, JAVA^{®}, JAVASCRIPT^{®}, PERL^{®}, PHP, PYTHON^{®}, WEBOBJECTS^{®}, etc. The mail server may utilize communication protocols such as Internet Message Access Protocol (IMAP), Messaging Application Programming Interface (MAPI), MICROSOFT^{®} Exchange, Post Office Protocol (POP), Simple Mail Transfer Protocol (SMTP), or the like. In some embodiments, the computer system 500 may implement a mail client stored program component. The mail client may be a mail viewing application, such as APPLE^{®} MAIL, MICROSOFT^{®} ENTOURAGE^{®}, MICROSOFT^{®} OUTLOOK^{®}, MOZILLA^{®} THUNDERBIRD^{®}, etc.

Furthermore, one or more computer-readable storage media may be utilized in implementing embodiments consistent with the present invention. A computer-readable storage medium refers to any type of physical memory 505 on which information or data readable by a processor 502 may be stored. Thus, a computer-readable storage medium may store instructions for execution by one or more processors, including instructions for causing the processors to perform steps or stages consistent with the embodiments described herein. The term "computer-readable medium" should be understood to include tangible items and exclude carrier waves and transient signals, i.e., non-transitory. Examples include Random Access memory (RAM), Read-Only memory (ROM), volatile memory, non-volatile memory, hard drives, Compact Disc (CD) ROMs, Digital Video Disc (DVDs), flash drives, disks, and any other known physical storage media.

In an embodiment, the computer system 500 may comprise remote devices 512.

The terms "an embodiment", "embodiment", "embodiments", "the embodiment", "the embodiments", "one or more embodiments", "some embodiments", and "one embodiment" mean "one or more (but not all) embodiments of the invention(s)" unless expressly specified otherwise.

The terms "including", "comprising", "having" and variations thereof mean "including but not limited to", unless expressly specified otherwise.

The enumerated listing of items does not imply that any or all of the items are mutually exclusive, unless expressly specified otherwise. The terms "a", "an" and "the" mean "one or more", unless expressly specified otherwise.

A description of an embodiment with several components in communication with each other does not imply that all such components are required. On the contrary, a variety of optional components are described to illustrate the wide variety of possible embodiments of the invention.

When a single device or article is described herein, it may be readily apparent that more than one device/article (whether or not they cooperate) may be used in place of a single device/article. Similarly, where more than one device or article is described herein (whether or not they cooperate), it may be readily apparent that a single device/article may be used in place of the more than one device or article or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

The illustrated operations of Fig. 3 and Fig. 5 show certain events occurring in a certain order. In alternative embodiments, certain operations may be performed in a different order, modified, or removed. Moreover, steps may be added to the above described logic and still conform to the described embodiments. Further, operations described herein may occur sequentially or certain operations may be processed in parallel. Yet further, operations may be performed by a single processing unit or by distributed processing units.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the disclosure of the embodiments of the invention is intended to be illustrative, but not limiting, of the scope of the invention, which is set forth in the following claims.

While various aspects and embodiments have been disclosed herein, other aspects and embodiments may be apparent to those skilled in the art. The various aspects and embodiments disclosed herein are for purposes of illustration and are not intended to be limiting, with the true scope and spirit being indicated by the following claims.

## Claims

1. A method of analysing software vulnerability in an automotive system, the method comprising:
receiving one or more application files (204) of a software application developed for the automotive system:
analysing the one or more application files (204) based on an automotive system specification (305), database parameters (306) from one or more databases (202), an expert preference (307), and information (308) about modules and functions of the software application;
identifying one or more vulnerabilities (205) in the one or more application files (204) based on the analysis; and
updating the one or more databases (202) with the one or more vulnerabilities (205), wherein the updated one or more databases (202) are used to detect the threats to the automotive system in real-time, wherein one or more patches (206) are provided to secure the automotive system.

2. The method of claim 1, wherein the one or more application files (204) comprises a source file and/or a binary file.

3. The method of claims 1 and 2, wherein the analysing comprises static analysis and dynamic analysis, wherein during the static analysis the binary file and/or the source code file are not executed and during dynamic analysis the binary file and/or the source code file are executed.

4. The method of claim 1, wherein one or more databases (202) comprises a Common Vulnerabilities and Exposure (CVE) database and a Security Operation Center (SOC) database.

5. The method of claim 4, wherein the CVE database comprises information related to a plurality of vulnerabilities and the SOC database comprises security information related to the automotive system.

6. The method of claim 1, wherein the automotive system specification (306) comprises version name, software update information, hardware information and network information.

7. The method of claim 1, wherein the identifying comprises:
comparing a result of analysis of the one or more application files (204) with the plurality of vulnerabilities in the one or more databases (202);
and
detecting the one or more vulnerabilities (205) based on the comparison.

8. A system (102) for analysing software vulnerability in an automotive system, the system (102) comprising:
a memory (302; and
one or more processors (303) configured to:
receive one or more application files (204) of a software application developed for the automotive system;
analyse the one or more application files (204) based on an automotive system specification (305), database parameters (306) from one or more databases (202), an expert preference (307), and information (308) about modules and functions of the software application;
identify one or more vulnerabilities (205) in the one or more application files (204) based on the analysis;
update the one or more databases (202) with the one or more vulnerabilities (205), wherein the updated one or more databases (202) are used to detect threats to the automotive system in real-time, wherein one or more patches (206) are provided to secure the automotive system.

9. The system (102) of claim 8, wherein the one or more application files (204) comprises a source file and/or a binary file.

10. The system (102) of claim 8 and 9, wherein the one or more processors (303) analyse the one or more application files (204) using static analysis and dynamic analysis, wherein during the static analysis the binary file and/or the source code file are not executed and during dynamic analysis the binary file and/or the source code file are executed.

11. The system (102) of claim 8, wherein one or more databases (202) comprises a Common Vulnerabilities and Exposure (CVE) database and a Security Operation Center (SOC) database.

12. The system (102) of claim 11, wherein the CVE database comprises a plurality of vulnerabilities and the SOC database comprises security information related to the automotive system.

13. The system (102) of claim 8, wherein the automotive system specification (305) comprises version name, software update information, hardware information and network information.

14. The system (102) of claim 8, wherein the one or more processors (303) are configured to identify by:
comparing a result of analysis of the one or more application files (204) with the plurality of vulnerabilities in the one or more databases (202);
and
detecting the one or more vulnerabilities (205) based on the comparison.
